# EUROPEAN PATENT SPECIFICATION

(11) **EP 4 241 971 B1**
(45) Date of publication and mention of the grant of the patent: **04.12.2024**
(21) Application number: 22161175.9
(22) Date of filing: 09.03.2022
(51) Int. Cl.: B29C 73/24, F03D 80/50, B29B 17/02, B29B 17/04, F03D 1/06

(54) **METHODS FOR REMOVING SPAR CAP ELEMENTS**
VERFAHREN ZUM ENTFERNEN VON HOLMKAPPENELEMENTEN
PROCÉDÉS D'ÉLIMINATION D'ÉLÉMENTS DE CAPUCHON DE LONGERON

(43) Date of publication of application: 13.09.2023
(73) Proprietor: LM Wind Power A/S, 6000 Kolding (DK)
(72) Inventor: REDMOND-GRAY, Dylan, Eastleigh, SO53 4SE (GB); RAZEGHI, Rama, Eastleigh, SO53 4SE (GB); HANRAHAN, Kristen, New Orleans, 70129 (US)
(74) Representative: Bardehle Pagenberg S.L.

(56) References cited:
- EP-A1- 1 531 035
- EP-A1- 2 881 246
- EP-A1- 3 712 423
- US-A1- 2017 058 860

## Description

### FIELD

The present disclosure relates to methods for removing spar cap elements from a spar cap for a wind turbine blade. The present disclosure further relates to methods for repairing a spar cap for a wind turbine blade and to related assemblies.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

In order to extract more energy from the wind, the size of the rotor diameter is increased by increasing the dimensions of the wind turbine blades. The larger size of the blades introduces higher physical loads into the blade and related components. Wind turbine rotor blades generally comprise a body shell formed by two shell halves of a composite material, e.g. glass fiber composites. The shell halves are generally manufactured using molding processes and then coupled together along the corresponding edges of the rotor blade. The body shell is relatively lightweight and has structural properties that are not designed to withstand all the bending moments and other loads acting on the blade during operation. To improve the structural properties of the rotor blade such as stiffness, strength and buckling resistance, the body shell is generally reinforced with structural components, e.g. spar caps at the suction and pressure sides of the blade with one or more shear webs connecting them. The spar caps may also be called "main laminate" or "spar cap laminate" of the wind turbine blade.

The spar caps can be manufactured using several materials such as glass fiber laminate composites and carbon fiber laminate composites. Modern spar caps may be manufactured using pultruded composites. Composites manufactured by pultrusion may have a constant cross-section that can be easily stacked to form a larger composite part. Therefore, a plurality of pultruded plates may be stacked and infused together in a mold to form a larger (i.e. longer, thicker, wider) composite part, e.g. a spar cap.

The spar cap may be manufactured "offline", i.e. the spar cap may be manufactured separately from the remainder of the blade. A stack of pultruded plates may be placed in a mold, which may subsequently be infused with a thermoset resin. The infused stack of plates forms the spar cap which is then to be joined to the shells of the wind turbine blade.

If a spar cap is damaged or defective, for example if it has cracks or delaminations, or if tolerances are not met, it is generally discarded and replaced by an entirely new spar cap. Resources dedicated to the manufacturing of the spar cap, including time and materials, are thus lost, and additional time, materials and manhours are needed to manufacture the new spar cap.

A defect may occur during the aforementioned offline manufacturing process of the spar cap, or after joining the spar cap to the shells of the blade. A defect may even occur during storage or transportation or use of a manufactured wind turbine blade.

EP 3 712 423 A1 discloses a method for removing one or more pultrusion elements.

The present disclosure aims at reducing the need for replacing a spar cap which is damaged or defective.

### SUMMARY

In an aspect of the present disclosure, a method for removing one or more thermoset pultrusion elements from a spar cap for a wind turbine blade is provided. The spar cap comprises a plurality of thermoset pultrusion elements, each of the thermoset pultrusion elements being at least partially surrounded by a thermoplastic material. The method comprises heating a portion of thermoplastic material which surrounds, at least in part, a first thermoset pultrusion element. The method further comprises removing part or all of the heated portion of thermoplastic material; and removing at least a portion of the first thermoset pultrusion element.

According to this aspect, one or more thermoset pultrusion elements such as pultruded plates and stacks of pultruded plates, or one or more portions thereof, may be removed from a spar cap by heating and removing the thermoplastic material which surrounds them at least in part. Desired thermoset pultrusion elements may therefore be removed from a spar cap in a non-destructive manner, while maintaining the structural integrity of the remaining of the spar cap. New or same thermoset pultrusion elements may then be added to the spar cap for repairing it. Throwing away the defective spar cap and starting to build one from scratch may be avoided. Material, human and time resources may be more efficiently used. A relatively fast and easy repair process may be obtained.

In the prior art, such a repair is not known and is generally not even possible because thermoset resin is generally used for infusing a stack of pultruded plates when manufacturing the spar cap. If a defect occurs at any time during or after the resin infusion process, the spar cap in general always needs to be discarded entirely.

Throughout this disclosure, the term "thermoset pultruded plate" is generally used to define reinforced materials, e.g. fibers or woven or braided strands, that are impregnated with a thermoset material such as a thermoset resin and pulled through a heated die such that the thermoset material cures or undergoes polymerization. Such pultruded plates may be stacked to form a "stack of pultruded plates". The pultruded plates comprised in a stack of pultruded plates may have same or different dimensions. For instance, different pultruded plates may have different lengths and/or widths. A pultruded plate and a stack of pultruded plates are encompassed herein by the term "pultrusion element".

Throughout this disclosure, a thermoset material generally encompasses a plastic material or polymer that, once cured, cannot be easily remolded or returned to a liquid state. As such, after initial forming, thermoset materials are generally resistant to heat, corrosion, and/or creep. Examples of thermoset materials may generally include, but are not limited to, some polyesters, esters, or epoxies.

Throughout this disclosure, a thermoplastic material generally encompasses a plastic material or polymer that typically becomes pliable or moldable when heated to a certain temperature and solidify upon cooling. Further, thermoplastic materials may include amorphous thermoplastic materials and/or semi-crystalline thermoplastic materials.

For example, some amorphous thermoplastic materials may generally include, but are not limited to, styrenes, vinyls, cellulosics, polyesters, acrylics, polysulphones, and/or imides. More specifically, exemplary amorphous thermoplastic materials may include polystyrene, acrylonitrile butadiene styrene (ABS), polymethyl methacrylate (PMMA), glycolised polyethylene terephthalate (PET-G), polycarbonate, polyvinyl acetate, amorphous polyamide, polyvinyl chlorides (PVC), polyvinylidene chloride, polyurethane, or any other suitable amorphous thermoplastic material. In addition, exemplary semi-crystalline thermoplastic materials may generally include, but are not limited to polyolefins, polyamides, fluropolymer, ethyl-methyl acrylate, polyesters, polycarbonates, and/or acetals. More specifically, exemplary semi-crystalline thermoplastic materials may include polybutylene terephthalate (PBT), polyethylene terephthalate (PET), polypropylene, polyphenyl sulfide, polyethylene, polyamide (nylon), polyetherketone, or any other suitable semi-crystalline thermoplastic material.

In a further aspect of the disclosure, a method for removing one or more thermoset pultrusion plates from a spar cap for a wind turbine blade is provided. The spar cap comprises a plurality of thermoset pultruded plates, the thermoset pultruded plates being separated by a thermoplastic material. The method comprises removing a top thermoset pultruded plate; heating and removing thermoplastic material surrounding a thermoset pultruded plate below the top thermoset pultruded plate; and removing the next thermoset pultruded plate.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 2C illustrates a molding system which may be used in the manufacture of a wind turbine blade;
Figure 3 shows a flow chart of an example of a method for removing one or more thermoset pultrusion elements from a spar cap for a wind turbine blade;
Figures 4A to 6B schematically illustrate examples of cross-sections of different spar caps in which the methods disclosed herein may be used; and
Figure 7 shows a flow chart of an example of a method for repairing a spar cap for a wind turbine blade.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

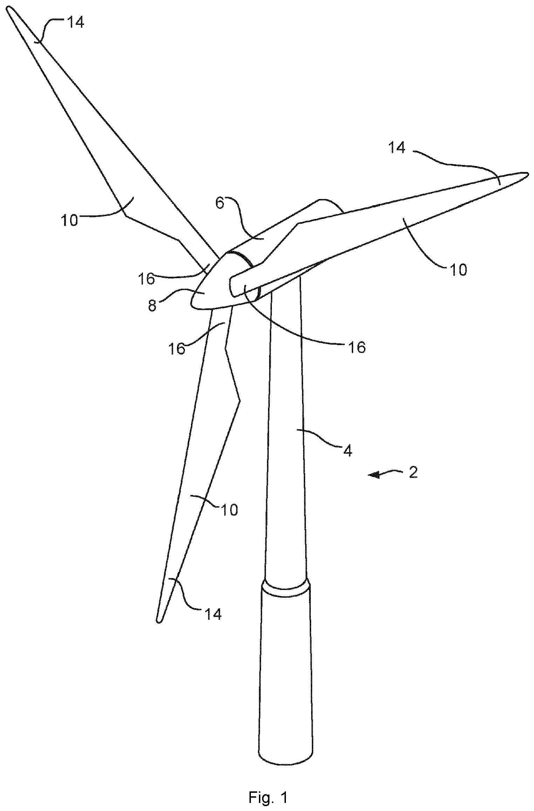

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

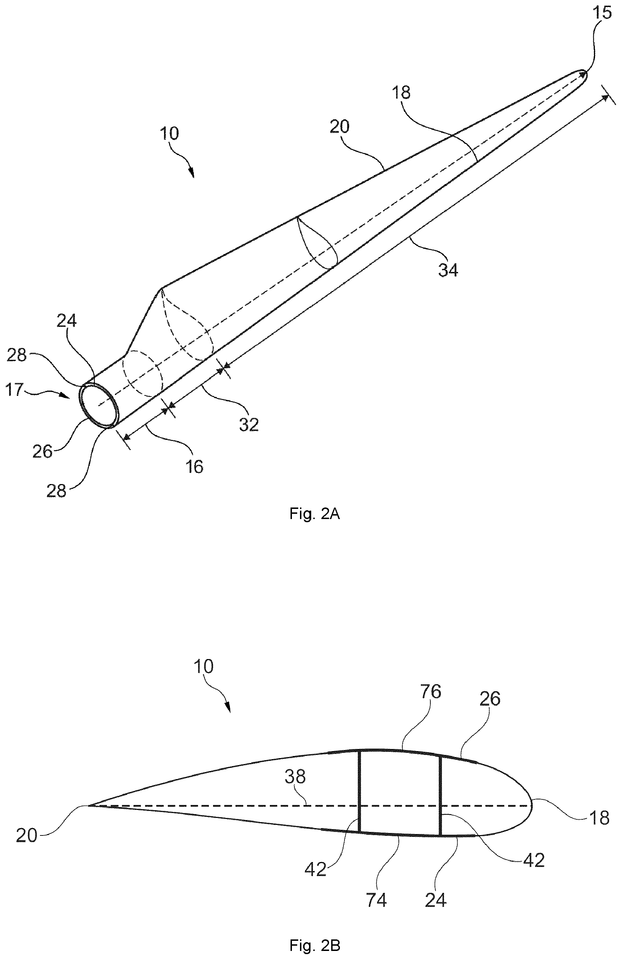

Fig. 2A shows a schematic view of an exemplary wind turbine blade 10. The wind turbine blade 10 has the shape of a conventional wind turbine blade with a root end 17 and a tip end 15 and comprises a root region 16 closest to the hub, a profiled or an airfoil region 34 furthest away from the hub and a transition region 32 between the root region 16 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34, also called the profiled region, has an ideal or almost ideal blade shape with respect to generating lift, whereas the root region 16, due to structural considerations, has a substantially circular or elliptical cross-section, which for instance makes it easier and safer to mount the blade 10 to the hub. The diameter (or the chord) of the root region 16 may be constant along the entire root area 16. The transition region 32 has a transitional profile gradually changing from the circular or elliptical shape of the root region 16 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular outer cross-sectional shape.

Figure 2B is a schematic diagram illustrating a cross sectional view of an exemplary wind turbine blade 10, e.g. of the airfoil region 34 of the wind turbine blade 10. The wind turbine blade 10 comprises a leading edge 18, a trailing edge 20, a pressure side 24, a suction side 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

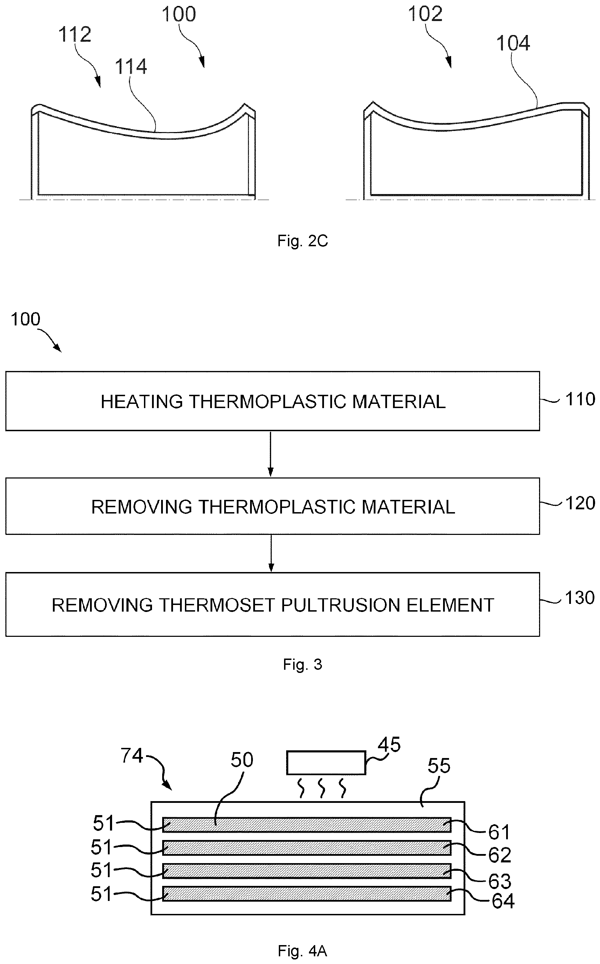

Figure 2C is a schematic diagram illustrating an exemplary mold system for molding a blade shell of a wind turbine blade. The mold system 100 comprises a first mold 102 and a second mold 112. The first mold 102 is configured for manufacturing a first blade shell part of a wind turbine blade, such as an upwind shell part of the wind turbine blade (forming the pressure side), and has a mold surface 104 for depositing fibers. The second mold 112 is configured for manufacturing a second blade shell part of the wind turbine blade, such as a downwind shell part of the wind turbine blade (forming the suction side), and has a mold surface 114 for depositing fibers.

In an aspect of the present disclosure, a method 100 for removing one or more thermoset pultrusion elements 50 from a spar cap 74, 76 for a wind turbine blade 10 is provided. The spar cap 74, 76 comprises a plurality of thermoset pultrusion elements 50 wherein each of the thermoset pultrusion elements 50 is at least partially surrounded by a thermoplastic material 55. The method 100 is schematically shown in the flow chart of figure 3.

The method comprises, at block 110, heating a portion of thermoplastic material 55 which surrounds, at least in part, a first thermoset pultrusion element 50. Any suitable heating tool 45 allowing selective heating may be used. For instance, a torch or a heater which may be moved over a spar cap may be used. In this way, a certain specific region of the thermoplastic material may be heated in a controlled manner. The method further comprises, at block 120, removing part or all of the heated portion of the thermoplastic material. The method further comprises, at block 130, removing at least a portion of the first thermoset pultrusion element 50. The spar cap may be arranged in a spar cap mold in some examples. In other examples, the spar cap may be supported, held and/or secured by any suitable supporting or securing element such as cranes, cradles, conveyor belts and others. Lifting elements such as cranes or others may be used to remove one or more thermoset pultrusion elements.

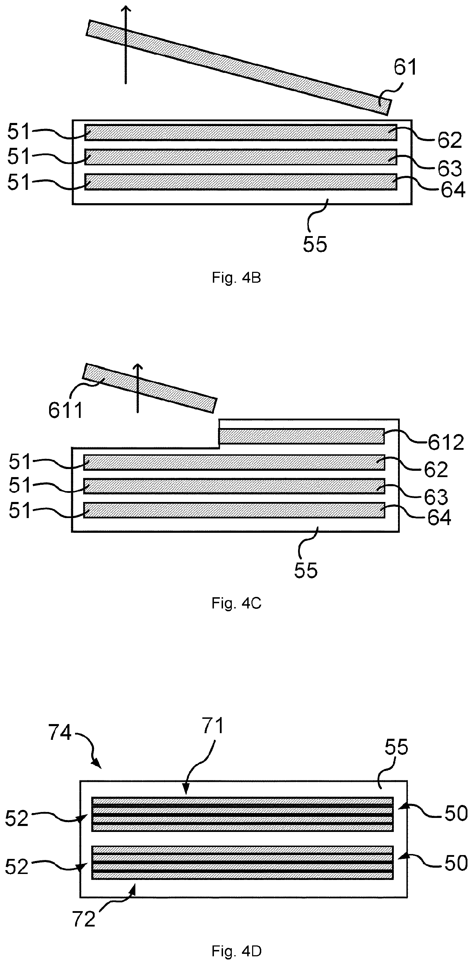

Heating the portion of thermoplastic material may comprise heating a top or a bottom portion of the spar cap 74. Figure 4A schematically illustrates a cross-section of an example of a spar cap 74. The spar cap 74 would extend lengthwise perpendicular to the plane of the figure. The spar cap 74 comprises four thermoset pultrusion elements 50, e.g. carbon fiber reinforced thermoset pultrusion elements. In this example, the thermoset pultrusion elements 50 are pultruded plates 51, e.g. carbon fiber reinforced pultruded plates. Each of the pultruded plates 51 is totally surrounded, in cross-section, by a thermoplastic material 55. In this and other examples, the thermoplastic material 55 may e.g. comprise a thermoplastic reinforced prepeg. Specifically, at least a top surface and a bottom surface of each pultruded plate 51 is surrounded by thermoplastic material 55. A heating tool 45 is used to heat a top portion of the spar cap. The thermoplastic material surrounding the top pultruded plate 61 is heated and at least a portion of it is removed. This allows access to the top pultruded plate 61, which is also removed. The removal of the top pultruded plate 61 is schematically represented in figure 4B. The remaining spar cap keeps its structural integrity.

A spar cap may comprise more or less than four pultruded plates in other examples. If necessary, one or more of the remaining pultruded plates 51 may be removed in the same way, by heating and removing a suitable amount of thermoplastic material 55, e.g. from top to bottom. In this and other examples, it may also be possible to remove the bottom pultruded plate 64 first, and then if required, to remove one or more further pultruded plates 51 from bottom to top.

Even though in all the depicted examples the pultruded plates 51 are shown as thin, wide and long plates which are stacked on top of each other, it is noted that this is done for illustration purposes only. I.e. in any of the depicted examples, a single pultruded plate 51 may in reality comprise a plurality of pultruded plates or "strips" next to each other. Each pultruded plate or strip may, in cross-section, have e.g. a width between 5 and 15 cm, and a height between 2 and 10 mm.

In the example of figure 4A, instead of removing the entire top pultruded plate, it may be possible to remove only a portion of the top pultruded plate. An example of this is schematically illustrated in figure 4C. In this example, the top pultruded plate 61, or a portion thereof, may be exposed by heating and removing thermoplastic material 55. A first portion 611 of the pultruded plate, e.g. a damaged portion, may be separated from the pultruded plate and removed. The location and size of the portion 611 to be separated may for instance depend on the extent of the damage of the top pultruded plate 61. Separation may be performed by cutting, sawing or other. A second portion 612 of the pultruded plate may remain as part of the spar cap 74. The removal of a portion 611 of a pultruded plate 51 is applicable in general to any pultruded plate. For instance, a portion of the bottom pultruded plate 64 or of other pultruded plate 51 may be removed. In general, a portion of a pultrusion element 50 may be removed. For instance, a portion of a pultruded stack 52 of pultruded plates may be cut away and removed.

Figure 4D schematically illustrates a cross-section of another example of a spar cap 74. The spar cap 74 comprises two pultrusion elements 50. In this example, the pultrusion elements 50 are stacks of pultruded plates 52. Each stack 52 may comprise a plurality of pultruded plates which were previously molded together using a thermoset resin.

Each stack 52 is completely surrounded, in cross-section, by a thermoplastic material 55. In this example, each stack of pultruded plates 52 comprises four pultruded plates 51. Each plate of the stack is adjacent to at least another plate of the stack. The thermoplastic material surrounding the top stack of pultruded plates 71 may be heated and at least a portion of it may be removed. This allows access to the top stack of pultruded plates 71, which may be removed. A stack of pultruded plates 52 may comprise more or less than four pultruded plates in other examples. In this and in other examples, a spar cap 74 may comprise stacks of pultruded plates 52 with a same or a different number of plates. All the stacks 52 of the spar cap 74 may comprise a same number of pultruded plates, or one or more stacks may have a different number of pultruded plates. Similarly to the example of figure 4A, it may be possible to remove a bottom stack of pultruded plates 72 first.

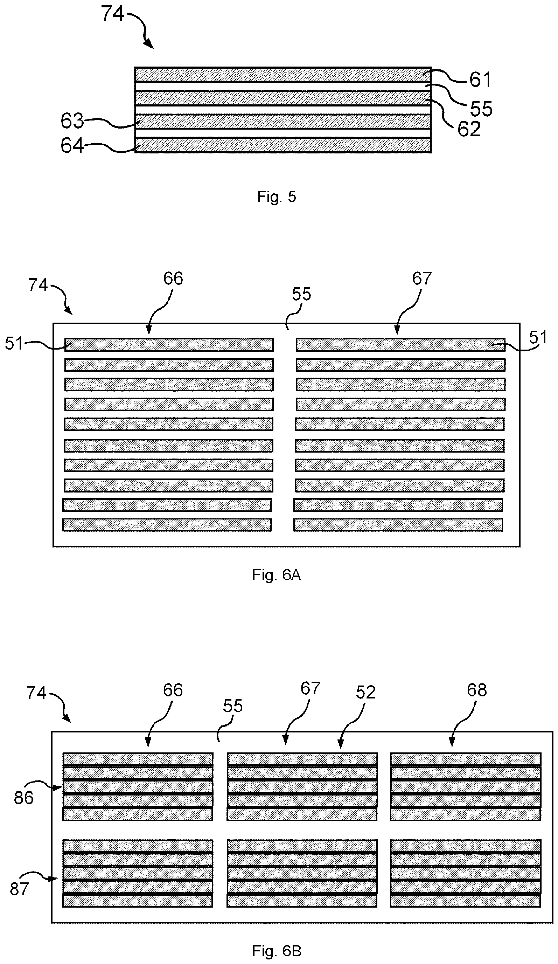

In some examples, the method may comprise, before heating the portion of the thermoplastic material, removing a second thermoset pultrusion element 50. The second thermoset pultrusion element may be removed in different ways. In some examples, see e.g. figures 4A and 5, the second thermoset pultrusion element may be a top 61 or a bottom 64 thermoset pultrusion element and the first thermoset element may be below or above, e.g. immediately below or above, the second thermoset pultrusion element 61, 64, respectively.

Figure 5 schematically illustrates a cross-section of another example of a spar cap 74. The spar cap 74 comprises four pultrusion elements. In this example, the pultrusion elements are pultruded plates 51. A top surface and a bottom surface of the middle pultruded plates 62, 63, i.e. the pultruded plates between the top 61 and the bottom 64 pultruded plates, is surrounded by thermoplastic material 55. A top surface of the top pultruded plate 61 and a bottom surface of the bottom pultruded plate 64 are not surrounded by thermoplastic material 55 in this example.

In the example of figure 5, removal of the second thermoset pultrusion element 61 may be performed by scarfing. Scarfing may be understood herein as an abrasive process in which a thermoset element 50 may be thinned and ultimately disintegrated. Suitable tools for scarfing may include for example grit wheels, grind wheels and sand paper. The top pultruded plate 61 may therefore be scarfed, e.g. grinded, and the next pultruded plate 62 be removed after heating and removing at least part of the thermoplastic material 55 surrounding the plate 62. In other examples, the pultruded plates of figure 5 may be stacks of pultruded plates. Scarfing of an external thermoset pultrusion element such as the top pultruded plate 61 of figure 5 may also be performed in other examples. In some of these examples, both scarfing and heating a thermoplastic material 55 may be performed to remove an external thermoset pultrusion element.

As the external thermoset pultrusion elements 61, 64 are easier to access than the middle thermoset pultrusion elements 62, 63, using a thermoplastic material 55 to cover the top and bottom surfaces of the middle thermoset pultrusion elements 62, 63 may help to remove them faster and more easily. Using a thermoplastic material 55 to also cover the top and the bottom surfaces of an external pultrusion element 61, 64 may further help to ease and speed the process of separation of one or more external thermoset pultrusion elements 61, 64 from a spar cap 74, 76 as processes such as grinding may be avoided.

The second thermoset pultrusion element may also be removed in a similar manner as the first thermoset pultrusion element. In the example of figure 4A, the first and second thermoset pultrusion elements may be e.g. any two pultruded plates 51 next to each other. I.e., the first thermoset element may be above or below the second thermoset pultrusion element. The second thermoset pultrusion element may e.g. be the top pultruded plate 61 and the first thermoset pultrusion element may e.g. be the top middle pultruded plate 62. Removing the second pultrusion element may therefore comprise heating a portion of thermoplastic material which surrounds, at least in part, the second thermoset pultrusion element, and removing part or all of the heated portion of the thermoplastic material 55.

In some examples, the plurality of thermoset elements 50 may be arranged in two or more columns. In some of these examples, the first thermoset element may be removed from a first column, and the second thermoset element may be removed from the same first column. Figure 6A schematically illustrates another example of a cross-section of a spar cap 74 comprising a plurality of pultruded plates 51. In this example, the pultruded plates are arranged in two columns 66, 67 and in a plurality of rows (there are 10 rows in the example of figure 6A). The first thermoset element may e.g. be the pultruded plate of the second row (starting from the top) and the left column 66, and the second thermoset element may e.g. be the top pultruded plate of the left column 66.

In other examples, the first thermoset pultrusion element may be removed from a first column, and the second thermoset pultrusion element may be removed from a second different column. For instance, in figure 6A, the first thermoset pultrusion element may e.g. be the top pultruded plate of the left column 66 and the second thermoset pultrusion element may e.g. be the top pultruded plate of the right column 67.

In general, the first and second thermoset pultrusion elements may be any two thermoset pultrusion elements of a spar cap that are to be removed. They may be next to each other e.g. vertically or laterally, or there may be one or more other thermoset pultrusion elements between them.

Figure 6B schematically illustrates another example of a cross-section of a spar cap 74. In this example, the thermoset pultrusion elements 50 are stacks 52 of pultruded plates. The spar cap 74 comprises two rows 86, 87 and three columns 66, 67, 68 of stacks 52 of pultruded plates.

In examples where the plurality of thermoset pultrusion elements 50 is arranged in two or more columns, e.g. in figures 6A and 6B, the first column, e.g. column 66 in figure 6A, may be removed in a single operation. This may mean that a certain column, e.g. an external column, is removed at once, instead of removing the thermoset pultrusion elements 50 of the column at different times. For instance, in the example of figure 6B, the left column 66 may be removed entirely before start to remove a stack 52 from the other columns. Removal of thermoset pultrusion elements may be performed column by column of thermoset pultrusion elements in some examples. This may accelerate the removal process. If the first and second thermoset pultrusion elements are in a same column, this column may be removed in a single operation. If the first and second thermoset pultrusion elements are in a different column, each of the columns may be removed in a single operation, or if the columns are adjacent, both columns may be removed at once, in a single operation.

In examples where the plurality of thermoset pultrusion elements 50 is arranged in two or more rows, e.g. in figures 4A-6B, one or more rows may be removed in a single operation. For instance, in the example of figure 6A, the top row may be removed entirely before start to remove a pultruded plate 51 from the other rows of to remove another row. The first and the second thermoset pultrusion elements 50 may be in a same row or in different rows. The row comprising the first thermoset pultrusion element may be removed in a single operation, and the row comprising the second thermoset pultrusion element may be remove in a single operation. If both rows are adjacent, the two rows may be removed together in a single operation. Removal of thermoset pultrusion elements may be performed row by row of thermoset pultrusion elements. Depending on the configuration, e.g. number and arrangement, of the thermoset pultrusion elements, removing row by row or column by column may be appropriate. In other examples, different strategies for removing thermoset pultrusion element may be used.

In some examples, the method may further comprise adding one or more thermoset pultrusion elements 50 and/or one or more portions of thermoset pultrusion elements to the spar cap 74, 76, and joining them to the spar carp by using a thermoplastic material. If a portion of a thermoset pultrusion element is added, it may be further joined to a corresponding portion of a thermoset pultrusion element of the spar cap, e.g. by gluing or in any suitable manner. In this way, after removing one or more thermoset pultrusion elements 50 or portions thereof, the same and/or new thermoset pultrusion elements may be added and joined to the spar cap for manufacturing a spar cap with the desired specifications and properties. If a thermoset pultrusion element or a portion thereof is damaged, it may be replaced. If there are thermoset pultrusion elements that are not damaged, but they needed to be removed e.g. for accessing damaged thermoset pultrusion elements or for adjusting their position, the same thermoset pultrusion elements may be used. In this way, at least a portion of the existing spar cap may still be used, and less materials and time may be wasted than if a new spar cap needs to be built.

Depending on the type of spar cap, this step may be performed in different ways. For example, the thermoset pultrusion elements 50 and the thermoplastic material 55 may be added into a spar cap mold and cured. In other examples, a thermoset pultrusion element may be at least partially surrounded with the thermoplastic material, thereby forming a block, and it may be joined to another block via thermoplastic welding. Using other ways of adding and joining thermoset pultrusion elements and thermoplastic material to the spar cap may be possible.

Method 100 may be used while a spar cap 74, 76 is being manufactured, for example if a defect or problem is detected already before finishing the spar cap, or after its manufacture, e.g. after a defect of problem is detected once the spar cap has been removed from its mold. Method 100 may also be used after the spar cap has been assembled with a shell of a wind turbine blade, e.g. after a wind turbine blade 10 of a wind turbine has been damaged. One or more spar caps of the damaged wind turbine blade may be recovered and refurbishes may be processed as explained herein for using them in wind turbine blades. The method may further comprise removing a portion of the shell of the wind turbine blade.

In some examples, the method may further comprise determining that the spar cap 74, 76 includes one or more defects before starting to remove one or more thermoset pultrusion elements 50 from the spar cap. Determining the presence of one or more defects may include detecting cracks, delaminations, erosion, distortion, unsuitable positioning of one or more thermoset pultrusion elements, or others. Determination may occur in one or more of a manufacturing site, a wind farm site and during transportation.

Therefore, although in the illustrated examples in figures 4A-6B the spar cap has been shown as a separate unit, i.e. not attached to other wind turbine blade components such as a shell of the wind turbine blade, it should be clear that similar methods may be used at later stages. For example, if a defect occurs or is detected after joining the spar cap to a shell of a wind turbine blade, in the prior art the whole assembly would normally be discarded. However, using examples of the methods and systems disclosed herein, part of the spar cap or blade assembly may be salvaged. A defect may even occur or be noticed after storage or during transportation. In some examples, repair may require removing part of a blade shell or substituting part of a blade shell.

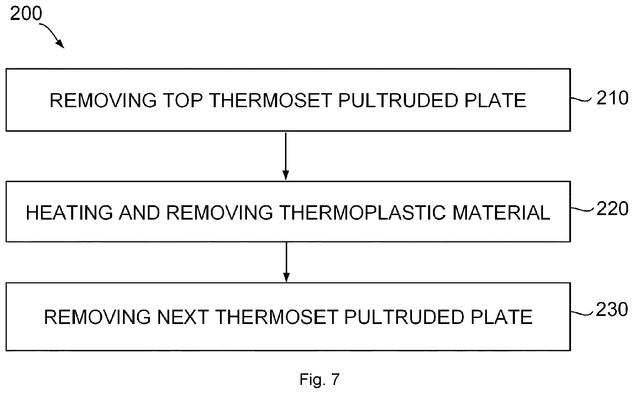

In a further aspect of the disclosure, a method 200 for removing one or more thermoset pultruded plates 51 from a spar cap 74, 76 for a wind turbine blade 10 is provided. The spar cap comprises a plurality of thermoset pultruded plates 51 separated by a thermoplastic material 55. Method 200 is illustrated in the flow chart of figure 7. This method may be applied for example to the spar caps of figures 4A, 4B, 5 and 6A. The description and explanations of the spar caps 74, 76 and pultruded plates 51 regarding method 100 also apply to method 200, and *vice versa.*

The method comprises, at block 210, removing a top thermoset pultruded plate. The top thermoset pultruded plate may be removed by grinding in some examples. If the top pultruded plate is surrounded by a thermoplastic material 55, the top thermoset pultruded plate may be removed by heating and removing the thermoplastic material 55 surrounding the top thermoset pultruded plate.

The method further comprises, at block 220, heating and removing thermoplastic material surrounding a thermoset pultruded plate below the top thermoset pultruded plate. The method further comprises, at block 230, removing the next thermoset pultruded plate, i.e. the plate that was below the top thermoset pultruded plate.

Once the necessary thermoset pultruded plates have been removed, the necessary thermoset pultruded plates, e.g. new thermoset pultruded plates, may be added to the spar cap. The method may further comprise completing the spar cap by joining missing thermoset pultruded plates to the spar cap by using thermoplastic material 55.

The spar cap 74, 76 may be repaired after having detected a defect in the spar cap upon its manufacturing.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for removing one or more thermoset pultrusion elements (50) from a spar cap (74, 76) for a wind turbine blade (10), the spar cap (74, 76) comprising a plurality of thermoset pultrusion elements (50) wherein each of the thermoset pultrusion elements is at least partially surrounded by a thermoplastic material (55), the method comprising:
heating (110) a portion of thermoplastic material (55) which surrounds, at least in part, a first thermoset pultrusion element (50);
removing (120) part or all of the heated portion of thermoplastic material (55); and
removing (130) at least a portion of the first thermoset pultrusion element (50).

2. The method of claim 1, wherein heating (110) the portion of thermoplastic material (55) comprises heating a top or a bottom portion of the spar cap (74, 76).

3. The method of claim 1 or claim 2, further comprising, before heating (110) the portion of thermoplastic material (55), removing a second thermoset pultrusion element (50).

4. The method of claim 3, wherein removal of the second thermoset pultrusion element (50) is performed by scarfing.

5. The method of claim 3 or claim 4, wherein the second thermoset pultrusion element (50) is a top (61, 71) or a bottom (64, 74) thermoset pultrusion element and the first thermoset element is below or above the second thermoset pultrusion element, respectively.

6. The method of any of claims 3-5, wherein removing the second pultrusion element comprises heating a portion of thermoplastic material (55) which surrounds, at least in part, the second thermoset pultrusion element, and removing part or all of the heated portion of thermoplastic material (55).

7. The method of any of claims 1 - 6, wherein the thermoplastic material (55) comprises a thermoplastic reinforced prepreg.

8. The method of any of claims 1 - 7, wherein the thermoset pultrusion element (50) is a carbon fiber reinforced thermoset pultrusion element.

9. The method of any of claims 1 - 8, wherein the spar cap (74, 76) has been assembled with a shell of a wind turbine blade (10).

10. The method of claim 9, further comprising removing at least a portion of the shell.

11. The method of any of claims 1 - 10, wherein the plurality of thermoset pultrusion elements (50) is arranged in two or more columns (66, 67, 68), and a first column is removed in a single operation.

12. The method of any of claims 1 - 11, further comprising adding one or more thermoset pultrusion elements (50) and/or one or more portions of thermoset pultrusion elements to the spar cap (74, 76), and joining them to the spar cap (74, 76) by using a thermoplastic material (55).

13. The method of any of claims 1 - 12, wherein the plurality of thermoset pultrusion elements (50) is a plurality of thermoset pultruded plates (51) or a plurality of stacks of thermoset pultruded plates (52).

14. The method of any of claims 1 - 13, further comprising determining that the spar cap (74, 76) includes one or more defects.

15. The method of claim 14, wherein determining occurs in one or more of a manufacturing site, a wind farm site and during transportation.

## Patentansprüche

1. Verfahren (100) zum Entfernen eines oder mehrerer duroplastischer Pultrusionselemente (50) von einer Gurte (74, 76) für ein Windturbinenblatt (10), wobei die Gurte (74, 76) eine Vielzahl von duroplastischen Pultrusionselementen (50) umfasst, wobei jedes der duroplastischen Pultrusionselemente zumindest teilweise von einem thermoplastischen Material (55) umgeben ist, wobei das Verfahren umfasst:
Erhitzen (110) eines Abschnitts aus thermoplastischem Material (55), der zumindest teilweise ein erstes duroplastisches Pultrusionselement (50) umgibt;
Entfernen (120) eines Teils oder des gesamten erwärmten Teils des thermoplastischen Materials (55); und
Entfernen (130) mindestens eines Teils des ersten duroplastischen Pultrusionselements (50).

2. Verfahren nach Anspruch 1, wobei das Erwärmen (110) des Teils aus thermoplastischem Material (55) das Erwärmen eines oberen oder eines unteren Teils der Gurte (74, 76) umfasst.

3. Verfahren nach Anspruch 1 oder Anspruch 2, wobei vor dem Erhitzen (110) des Teils aus thermoplastischem Material (55) ein zweites duroplastisches Pultrusionselement (50) entfernt wird.

4. Verfahren nach Anspruch 3, wobei das Entfernen des zweiten duroplastischen Pultrusionselements (50) durch Flämmen erfolgt.

5. Verfahren nach Anspruch 3 oder Anspruch 4, wobei das zweite duroplastische Pultrusionselement (50) ein oberes (61, 71) oder ein unteres (64, 74) duroplastisches Pultrusionselement ist und das erste duroplastische Element unter bzw. über dem zweiten duroplastischen Pultrusionselement liegt.

6. Verfahren nach einem der Ansprüche 3 bis 5, wobei das Entfernen des zweiten Pultrusionselements das Erhitzen eines Teils des thermoplastischen Materials (55), das das zweite duroplastische Pultrusionselement zumindest teilweise umgibt, und das teilweise oder vollständige Entfernen des erhitzten Teils des thermoplastischen Materials (55) umfasst.

7. Verfahren nach einem der Ansprüche 1 bis 6, wobei das thermoplastische Material (55) ein thermoplastisch verstärktes Prepreg umfasst.

8. Verfahren nach einem der Ansprüche 1 bis 7, wobei das duroplastische Pultrusionselement (50) ein kohlenstofffaserverstärktes duroplastisches Pultrusionselement ist.

9. Verfahren nach einem der Ansprüche 1 bis 8, wobei die Gurte (74, 76) mit einer Schale eines Windturbinenblatts (10) zusammengebaut wurde.

10. Das Verfahren nach Anspruch 9 umfasst ferner das Entfernen mindestens eines Teils der Schale.

11. Verfahren nach einem der Ansprüche 1 bis 10, wobei die Vielzahl von duroplastischen Pultrusionselementen (50) in zwei oder mehr Säulen (66, 67, 68) angeordnet ist und eine erste Säule in einem einzigen Arbeitsgang entfernt wird.

12. Verfahren nach einem der Ansprüche 1 bis 11, das ferner das Hinzufügen eines oder mehrerer duroplastischer Pultrusionselemente (50) und/oder eines oder mehrerer Abschnitte von duroplastischen Pultrusionselementen zu der Gurte (74, 76) und das Verbinden dieser Elemente mit der Gurte (74, 76) unter Verwendung eines thermoplastischen Materials (55) umfasst.

13. Verfahren nach einem der Ansprüche 1 bis 12, wobei die Mehrzahl von duroplastischen Pultrusionselementen (50) eine Mehrzahl von duroplastischen pultrudierten Platten (51) oder eine Mehrzahl von Stapeln von duroplastischen pultrudierten Platten (52) ist.

14. Verfahren nach einem der Ansprüche 1 bis 13, bei dem ferner festgestellt wird, dass die Gurte (74, 76) einen oder mehrere Fehler aufweist.

15. Verfahren nach Anspruch 14, wobei die Feststellung an einem oder mehreren der folgenden Orte erfolgt: am Herstellungsort, am Standort eines Windparks und während des Transports.

## Revendications

1. Procédé (100) pour retirer un ou plusieurs éléments de pultrusion thermodurcissable (50) d'une courroie (74, 76) d'une pale d'éolienne (10), la courroie (74, 76) comprenant une pluralité d'éléments de pultrusion thermodurcissable (50) dans lesquels chacun des éléments de pultrusion thermodurcissable est au moins partiellement entouré d'un matériau thermoplastique (55), le procédé comprenant :
chauffer (110) une partie du matériau thermoplastique (55) qui entoure, au moins en partie, un premier élément de pultrusion thermodurcissable (50) ;
retirer (120) tout ou partie de la partie chauffée du matériau thermoplastique (55) ; et
retirer (130) au moins une partie du premier élément de pultrusion thermodurcissable (50).

2. Procédé de la revendication 1, dans laquelle le chauffage (110) de la portion de matériau thermoplastique (55) comprend le chauffage d'une partie supérieure ou inférieure de la courroie de pale (74, 76).

3. Procédé de la revendication 1 ou de la revendication 2, comprenant en outre, avant de chauffer (110) la portion de matériau thermoplastique (55), l'enlèvement d'un second élément de pultrusion thermodurcissable (50).

4. Procédé de la revendication 3, dans lequel l'enlèvement du second élément de pultrusion thermodurcissable (50) est effectué par scarification.

5. Procédé de la revendication 3 ou de la revendication 4, dans laquelle le second élément de pultrusion thermodurcissable (50) est un élément de pultrusion thermodurcissable supérieur (61, 71) ou inférieur (64, 74) et le premier élément thermodurcissable se trouve respectivement au-dessous ou au-dessus du second élément de pultrusion thermodurcissable.

6. Procédé de l'une des revendications 3 à 5, dans lequel l'enlèvement du second élément de pultrusion consiste à chauffer une partie du matériau thermoplastique (55) qui entoure, au moins en partie, le second élément de pultrusion thermodurcissable, et à retirer une partie ou la totalité de la partie chauffée du matériau thermoplastique (55).

7. Procédé de l'une des revendications 1 à 6, dans laquelle le matériau thermoplastique (55) comprend un préimprégné renforcé de thermoplastique.

8. Procédé de l'une des revendications 1 à 7, dans laquelle l'élément de pultrusion thermodurcissable (50) est un élément de pultrusion thermodurcissable renforcé par des fibres de carbone.

9. Procédé de l'une des revendications 1 à 8, dans laquelle la courroie de pale (74, 76) a été assemblé avec la coque d'une pale d'éolienne (10).

10. Procédé de la revendication 9, comprenant en outre l'enlèvement d'au moins une partie de la coque.

11. Procédé de l'une des revendications 1 à 10, dans lequel la pluralité d'éléments de pultrusion thermodurcissables (50) est disposée en deux colonnes ou plus (66, 67, 68), et une première colonne est enlevée en une seule opération.

12. Procédé de l'une des revendications 1 à 11, comprenant en outre l'ajout d'un ou de plusieurs éléments de pultrusion thermodurcissable (50) et/ou d'une ou de plusieurs portions d'éléments de pultrusion thermodurcissable à la courroie de pale (74, 76), et leur assemblage à la courroie de pale (74, 76) à l'aide d'un matériau thermoplastique (55).

13. Procédé de l'une des revendications 1 à 12, dans laquelle la pluralité d'éléments de pultrusion thermodurcissable (50) est une pluralité de plaques pultrudées thermodurcissables (51) ou une pluralité de piles de plaques pultrudées thermodurcissables (52).

14. Procédé de l'une des revendications 1 à 13, comprenant en outre la détermination que la courroie de pale (74, 76) comporte un ou plusieurs défauts.

15. Procédé de la revendication 14, dans laquelle la détermination a lieu sur un ou plusieurs des sites de fabrication, sur un site de parc éolien et pendant le transport.
